# EUROPÄISCHE PATENTSCHRIFT

(11) **EP 1 214 216 B1**
(45) Veröffentlichungstag und Bekanntmachung des Hinweises auf die Patenterteilung: **10.03.2004**
(21) Anmeldenummer: 00962371.1
(22) Anmeldetag: 24.08.2000
(51) Int. Cl.: B60K 35/00, G01C 21/26

(54) **VERFAHREN UND VORRICHTUNG ZUR AKTIVEN HILFESTELLUNG EINES KRAFTFAHRZEUGFÜHRERS IN EINEM KRAFTFAHRZEUG**
METHOD AND DEVICE FOR ACTIVELY ASSISTING A VEHICLE DRIVER IN A MOTOR VEHICLE
PROCEDE ET DISPOSITIF DE POSITION D'ASSISTANCE ACTIVE D'UN CONDUCTEUR DANS UNE AUTOMOBILE

(30) Priorität: 03.09.1999 DE 19941973
(43) Veröffentlichungstag der Anmeldung: 19.06.2002
(60) Teilanmeldung: 02090390.2
(73) Patentinhaber: Volkswagen Aktiengesellschaft, 38436 Wolfsburg (DE)
(72) Erfinder: HEISE, Gilbert, 38442 Wolfsburg (DE); DIRKSEN, Susanne, 38440 Wolfsburg (DE); BUSSE, Gerald, 31141 Hildesheim (DE); LILIENTHAL, Jörg, 38518 Gifhorn (DE)
(74) Vertreter: Effert, Bressel und Kollegen
(86) Internationale Anmeldenummer: PCT/EP2000/008250
(87) Internationale Veröffentlichungsnummer: WO 2001/017812

(56) Entgegenhaltungen:
- EP-A- 0 756 153
- WO-A-99/28145
- US-A- 5 239 700
- US-A- 5 469 150

## Beschreibung

Die Erfindung betrifft ein Verfahren und eine Vorrichtung zur Durchführung des Verfahrens zur aktiven Hilfestellung eines Kraftfahrzeugführers in einem Kraftfahrzeug.

Kraftfahrzeuge stellen ein immer komplexer werdendes Gesamtsystem dar, das einem Kraftfahrzeugführer einerseits immer mehr Komfortmöglichkeiten bietet und andererseits über immer mehr sicherheitsrelevante Systeme verfügt. Diese sicherheitsrelevanten Systeme müssen jedoch hinsichtlich ihrer Funktionalität überwacht werden. Bei einem Defekt oder einem fahrzeugkritischen Zustand weiß ein Kraftfahrzeugführer häufig nicht, wie er auf eine derartige Fehlermeldung beispielsweise mittels einer aufleuchtenden LED reagieren soll.

Aus der WO 99/28 145 ist eine Vorrichtung gemäß dem Oberbegriff von Anspruch 3 und ein Verfahren zur aktiven Hilfestellung eines Kraftfahrzeugführers in einem Kraftfahrzeug bekannt, mittels mindestens eines Steuergerätes und einer Eingabeund Anzeigeeinheit, wobei das Steuergerät auf die Daten von fahrzeugzustandsrelevanten Sensoren und Steuergeräten zugreifen kann. Dabei erfolgt eine Erfassung eines kritischen Fahrzeugzustandes durch das Steuergerät durch Auswertung der Daten der fahrzeugrelevanten Sensoren und Steuergeräte. Der erfasste fahrzeugkritische Zustand wird dann auf der Anzeigeeinheit dargestellt. Automatisch oder nach einer Interaktion durch den Kraftfahrzeugführer wird zusätzlich eine Handlungsempfehlung auf der Anzeigeeinheit dargestellt. Beispielsweise wird ein niedriger Kühlwasserstand erfasst und angezeigt. Zusätzlich erhält dann der Kraftfahrzeugführer die Handlungsempfehlung, den Kühlwasserstand zu kontrollieren.

Der Erfindung liegt daher das technische Problem zugrunde, ein Verfahren und eine Vorrichtung zur aktiven Hilfestellung eines Kraftfahrzeugführers in einem Kraftfahrzeug zu schaffen, mittels derer ein Kraftfahrzeugführer umfassender unterstützt wird.

Die Lösung des technischen Problems ergibt sich durch die Gegenstände mit den Merkmalen der Patentansprüche 1 und 3. Weitere vorteilhafte Ausgestaltungen der Erfindung ergeben sich aus den Unteransprüchen.

Hierzu werden mittels des Steuergerätes die erfassten kritischen Fahrzeugzustände ausgewertet, eine Liste von möglichen Handlungen des Kraftfahrzeugführers auf dem erfassten kritischen Fahrzeugzustand erstellt und auf der Anzeigeeinheit als Eingabeoption zusammen mit dem kritischen Fahrzeugzustand dargestellt, wobei eine ausgewählte Eingabeoption durch das Steuergerät ausführbar ist, indem das Steuergerät den Steuergeräten bzw. Einrichtungen zur externen Kommunikation Steuerbefehle übermittelt.

Erfasst beispielsweise das Steuergerät, dass die Motortemperatur ihren zulässigen Wert überschritten hat, so wird dies auf der Anzeigeeinheit automatisch dargestellt. Zusätzlich werden die möglichen Handlungen wie "Motor abstellen", "Nächste Werkstatt anrufen" oder "ignorieren" auf der Anzeigeeinheit dargestellt. Wählt der Kraftfahrzeugführer die Handlung "Motor abstellen", so schaltet die Vorrichtung selbsttätig den Motor ab. Wählt der Kraftfahrzeugführer hingegen die Handlung "Nächste Werkstatt anrufen", so sucht die Vorrichtung unter Zuhilfenahme der Daten einer Navigationsvorrichtung die nächste Servicestelle und wählt über ein Autotelefonsystem selbsttätig die Rufnummer der Servicestelle. Mittels des Verfahrens werden daher dem Kraftfahrzeugführer nicht nur die kritischen Zustände angezeigt, sondern auch die entsprechenden Gegenmaßnahmen, die dann ebenfalls aktiv unterstützt werden. Die einzelnen Gegenmaßnahmen sind hierzu vorzugsweise situationsbezogen in einem dem Steuergerät zugeordneten Speicher abgelegt. Beispiele für andere kritische Fahrzeugzustände sind beispielsweise der Motorölstand.

In einer bevorzugten Ausführungsform ist das Steuergerät über einen CAN-Bus mit anderen Steuergeräten verbunden.

In einer weiteren bevorzugten Ausführungsform ist die Anzeigeeinheit als Touch-Screen ausgebildet.

In einer weiteren bevorzugten Ausführungsform ist die Eingabeeinheit als Spracherkennungseinheit und/oder als bidirektionaler Dreh-Druckgeber ausgebildet.

Das Verfahren kann auch mit Komfortkomponenten kombiniert werden, d.h. gleichzeitig erfolgen Eingriffe in Komfortkomponenten und Fahrzeugzustandskomponenten. Wählt der Kraftfahrzeugführer beispielsweise während der Fahrt einen im Kraftfahrzeug angeordneten Fernseher aus, so wird dem Fahrer einerseits mitgeteilt, dass dies während der Fahrt nicht zulässig ist. Des weiteren erfolgt unmittelbar an die Warnung eine Anfrage, ob eine Parkmöglichkeit gesucht werden soll. Wird dies durch den Kraftfahrzeugführer bejaht, so sucht das System mit Hilfe eines Navigationssystems die nächste Parkmöglichkeit und navigiert den Kraftfahrzeugführer dorthin. Parallel zur Navigation können bereits vorbereitende Einstellungen wie Senderwahl abgefragt und durchgeführt werden. Ist das Kraftfahrzeug zum Parkplatz navigiert worden, wird der Kraftfahrzeugführer gefragt, ob der Motor abgestellt werden soll, was dann gegebenenfalls durch das System selbsttätig durchgeführt wird.

Die Erfindung wird nachfolgend anhand eines bevorzugten Ausführungsbeispiels näher erläutert. Die Fig. zeigen.

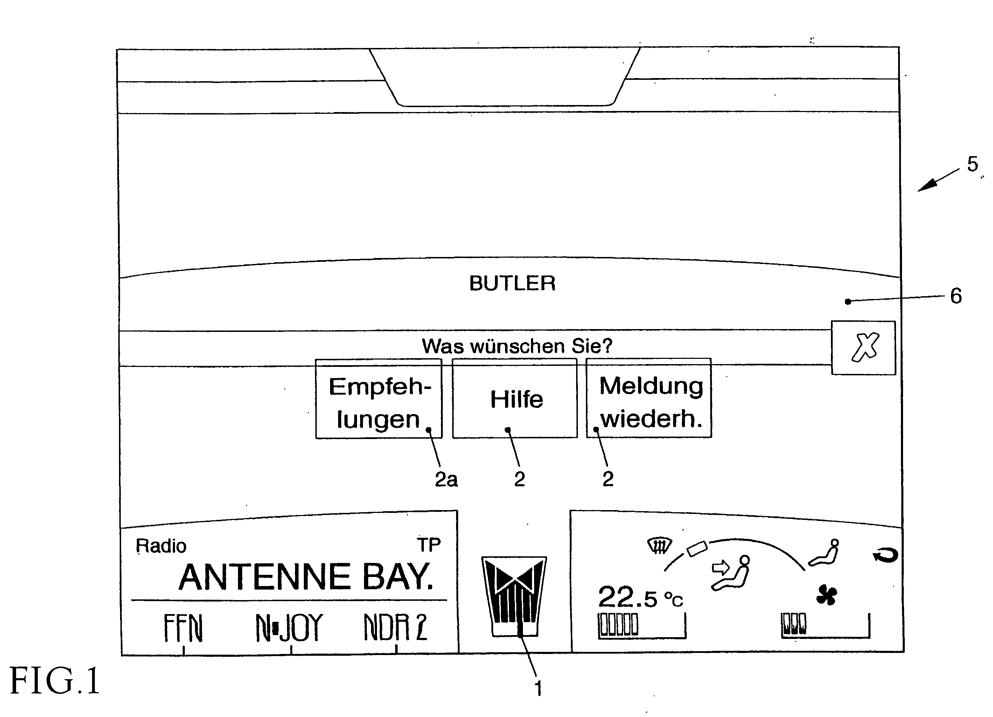

- Fig. 1: eine Darstellung auf einer Anzeigeeinheit nach Aktivierung des Verfahrens und
- Fig. 2: eine Darstellung eines automatisch angezeigten kritischen Fahrzeugzustandes.

Dem Verfahren zur aktiven Hilfestellung eines Kraftfahrzeugführers in einem Kraftfahrzeug ist ein Aktivierungsfeld 1 zugeordnet, das auf der als Touch-Screen ausgebildeten Anzeigeeinheit 5 an stets der gleichen Stelle angeordnet ist. Wird dieses Aktivierungsfeld 1 betätigt, so verändert ein nicht dargestelltes Steuergerät die aktuelle Darstellung auf der Anzeigeeinheit 5 und erzeugt ein erstes Eingabemenü 6 auf der Anzeigeeinheit 5. Dieses Eingabemenü 6 umfasst eine Kennzeichnung, dass das Verfahren aktiviert ist, in dem der Name der Funktion wie beispielsweise "BUTLER" eingeblendet wird, wobei zusätzlich der obere Rand des Eingabemenüs 6 abgerundet ausgebildet ist. Des weiteren umfasst das Eingabemenü 6 drei Eingabefelder 2, auf denen alphanumerisch die Wahlmöglichkeiten dargestellt sind. Dabei kann der Nutzer zwischen den Eingabeoptionen "Empfehlungen", "Hilfe" und "Meldung wiederholen" wählen, wobei die Eingabefelder 2 als berührungssensitive Felder ausgebildet sind. Alternativ oder kumulativ kann die Eingabe auch über einen Sprachbefehl und/oder über einen bidirektionalen Dreh-Druckgeber erfolgen, der beispielsweise in der EP 366 132 B1 offenbart ist.

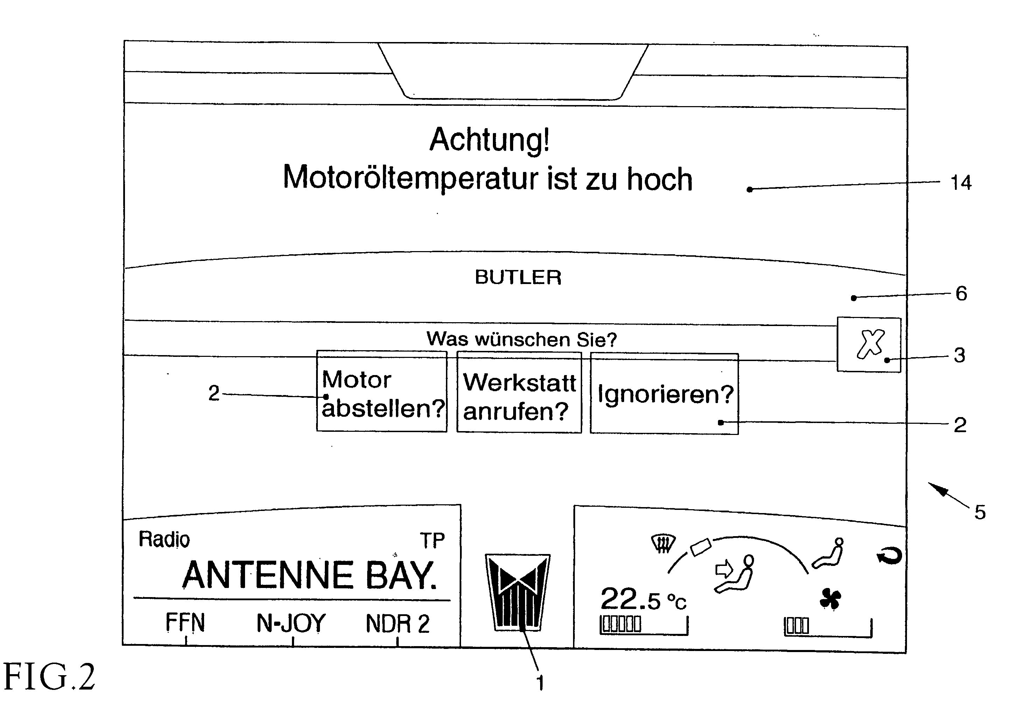

In der Fig. 2 ist eine Darstellung einer automatisch angezeigten Warnmeldung 14 eines kritischen Fahrzeugzustandes dargestellt. Im dargestellten Beispiel ist dies die erhöhte Motoröltemperatur. Hierzu leitet das für die Motoröltemperatur zuständige Steuergerät oder Sensorik eine Warnmeldung an das die Anzeigeeinheit 5 steuernde Steuergerät weiter. Das Steuergerät erzeugt daraufhin eine entsprechende Warnmeldung 14 und stellt diese optisch hervorgehoben auf der Anzeigeeinheit 5 dar. Zur verbesserten Wahrnehmung kann die Warnmeldung farblich abgehoben und/oder mit zusätzlichen Piktogrammen hervorgehoben werden. Des weiteren sind auch zusätzliche akustische und/oder haptische Warnhinweise möglich. Gleichzeitig aktiviert das Steuergerät das Verfahren zur aktiven Hilfestellung, so dass automatisch das Eingabemenü 6 mit den zugeordneten Eingabefeldern 2 angezeigt wird. Auf diesen Eingabefeldern 2 werden dem Kraftfahrzeugführer Handlungsmöglichkeiten angeboten, wie auf den dargestellten kritischen Fahrzeugzustand reagiert werden könnte. Dabei kann der Kraftfahrzeugführer zwischen den Optionen "Motor abstellen", "Werkstatt anrufen" oder "Ignorieren" wählen. Wählt der Kraftfahrzeugführer das Eingabefeld 2 "Motor abstellen", so schaltet das Steuergerät selbsttätig den Motor ab. Dabei kann der Vorgang zeitlich verzögert werden, damit der Kraftfahrzeugführer das Kraftfahrzeug an einem geeigneten Ort abstellen kann. Wählt der Kraftfahrzeugführer hingegen das Eingabefeld 2 "Werkstatt anrufen", so wird durch das Steuergerät automatisch die nächstliegende Werkstatt angerufen. Entsprechend wird bei der Auswahl des Eingabefeldes 2 "Ignorieren" die Warnmeldung 14 gelöscht. Mittels des "Schließ-Feldes" 3 kann der Nutzer das Verfahren abbrechen. beispielhafte Detaildarstellung ist in Fig. 4 dargestellt. Auf Wunsch kann sich der Nutzer die Speisekarte vorlesen lassen, wozu das Eingabefeld 11 "Vorlesen" betätigt wird. Durch Betätigen des Eingabefeldes 4 wird automatisch eine Telefonverbindung zu der Gaststätte hergestellt, beispielsweise um einen Tisch zu bestellen. Möchte hingegen der Nutzer Navigationsdaten zu der Gaststätte erhalten, so wird bei Betätigung des Eingabefeldes 12 "Navigation" eine digitale Straßenkarte 13 mit Routenführung gemäß Fig. 5 auf der Anzeigeeinheit 5 dargestellt und/oder die Zielführung aktiviert.

In der Fig. 6 ist eine Darstellung einer automatisch angezeigten Warnmeldung 14 eines kritischen Fahrzeugzustandes dargestellt. Im dargestellten Beispiel ist dies die erhöhte Motoröltemperatur. Hierzu leitet das für die Motoröltemperatur zuständige Steuergerät oder Sensorik eine Warnmeldung an das die Anzeigeeinheit 5 steuernde Steuergerät weiter. Das Steuergerät erzeugt daraufhin eine entsprechende Warnmeldung 14 und stellt diese optisch hervorgehoben auf der Anzeigeeinheit 5 dar. Zur verbesserten Wahrnehmung kann die Warnmeldung farblich abgehoben und/oder mit zusätzlichen Piktogrammen hervorgehoben werden. Des weiteren sind auch zusätzliche akustische und/oder haptische Warnhinweise möglich. Gleichzeitig aktiviert das Steuergerät das Verfahren zur aktiven Hilfestellung, so daß automatisch das Eingabemenü 6 mit den zugeordneten Eingabefeldern 2 angezeigt wird. Auf diesen Eingabefeldern 2 werden dem Kraftfahrzeugführer Handlungsmöglichkeiten angeboten, wie auf den dargestellten kritischen Fahrzeugzustand reagiert werden könnte. Dabei kann der Kraftfahrzeugführer zwischen den Optionen "Motor abstellen", "Werkstatt anrufen" oder "Ignorieren" wählen. Wählt der Kraftfahrzeugführer das Eingabefeld 2 "Motor abstellen", so schaltet das Steuergerät selbsttätig den Motor ab. Dabei kann der Vorgang zeitlich verzögert werden, damit der Kraftfahrzeugführer das Kraftfahrzeug an einem geeigneten Ort abstellen kann. Wählt der Kraftfahrzeugführer hingegen das Eingabefeld 2 "Werkstatt anrufen", so wird durch das Steuergerät automatisch die nächstliegende Werkstatt angerufen. Entsprechend wird bei der Auswahl des Eingabefeldes 2 "Ignorieren" die Warnmeldung 14 gelöscht.

## Patentansprüche

1. Verfahren zur aktiven Hilfestellung eines Kraftfahrzeugführers in einem Kraftfahrzeug, mittels mindestens eines Steuergerätes und einer Eingabeund Anzeigeeinheit (5), wobei das Steuergerät auf die Daten von fahrzeugzustandsrelevanten Sensoren und Steuergeräten zugreifen und den Steuergeräten bzw. Einrichtungen zur externen Kommunikation Steuerbefehle übermitteln kann, umfassend folgende Verfahrensschritte:
a) Erfassen eines kritischen Fahrzeugzustandes durch das Steuergerät durch Auswertung der Daten der fahrzeugzustandsrelevanten Sensoren und Steuergeräte,
b) Erstellen einer Liste von möglichen Handlungen des Kraftfahrzeugführers auf den erfassten kritischen Fahrzeugzustand,
c) Darstellen des erfassten kritischen Fahrzeugzustandes und der Liste von möglichen Handlungen des Kraftfahrzeugführers auf der Anzeigeeinheit (5) und
d) Durchführung der durch den Kraftfahrzeugführer ausgewählten Handlung durch das Steuergerät.

2. Verfahren nach Anspruch 1, **dadurch gekennzeichnet, dass** als kritischer Fahrzeugzustand die Motoröltemperatur oder der Motorölstand erfasst wird.

3. Vorrichtung zur aktiven Hilfestellung eines Kraftfahrzeugführers in einem Kraftfahrzeug, umfassend mindestens ein Steuergerät und eine Eingabeund Anzeigeeinheit (5), wobei über das Steuergerät fahrzeugkritische Zustände erfassbar und auf der Anzeigeeinheit (5) darstellbar sind, **dadurch gekennzeichnet, dass** mittels des Steuergerätes die erfassten fahrzeugkritischen Zustände auswertbar sind, eine Liste von möglichen Handlungen des Kraftfahrzeugführers auf den erfassten kritischen Fahrzeugzustand erstellbar und auf der Anzeigeeinheit (5) als Eingabeoption zusammen mit dem kritischen Fahrzeugzustand darstellbar sind, wobei eine ausgewählte Eingabeoption durch das Steuergerät ausführbar ist.

4. Vorrichtung nach Anspruch 3, **dadurch gekennzeichnet, dass** das Steuergerät über einen CAN-Bus mit anderen Steuergeräten des Kraftfahrzeuges verbunden ist.

5. Vorrichtung nach einem der Ansprüche 3 oder 4, **dadurch gekennzeichnet, dass** die Anzeigeeinheit (5) als Touch-Screen ausgebildet ist.

6. Vorrichtung nach einem der Ansprüche 3 bis 5, **dadurch gekennzeichnet, dass** die Eingabeeinheit als Spracherkennungseinheit und/oder als bidirektionaler Dreh-Druckgeber ausgebildet ist.

7. Vorrichtung nach einem der Ansprüche 3 bis 6, **dadurch gekennzeichnet, dass** als fahrzeugkritische Zustände die Motoröltemperatur oder der Motorölstand erfassbar sind.

## Claims

1. Method for actively assisting a driver of a vehicle in a motor vehicle, by means of at least one controller and one input unit and display unit (5), the controller accessing the data of sensors and controller switch related to the vehicle state, and being able to transmit control commands to the controllers or devices for external communication, comprising the following method steps:
a) a critical vehicle state is sensed by the controller by evaluating the data of the sensors which relate to the vehicle state and controllers,
b) a list of possible actions by the driver of the motor vehicle in response to the sensed critical vehicle state is created,
c) the sensed critical vehicle state and the list of possible actions of the driver of the motor vehicle are represented on the display unit (5), and
d) the action which is selected by the driver of the motor vehicle is carried out by the controller.

2. Method according to Claim 1, **characterized in that** the temperature or the state of the engine oil is sensed as a critical vehicle state.

3. Device for actively assisting a driver of a motor vehicle in a motor vehicle, comprising at least one controller and one input and display unit (5), it being possible to sense states which are critical for the vehicle via the controller and for said states to be represented on the display unit (5), **characterized in that** the sensed states which are critical for the vehicle can be evaluated by means of the controller, a list of possible actions of the driver of the motor vehicle in response to the sensed critical vehicle state can be generated and can be represented on the display unit (5) as an input option together with the critical vehicle state, a selected input option being capable of being carried out by means of the controller.

4. Device according to Claim 3, **characterized in that** the controller is connected to other controllers of the motor vehicle via a CAN bus.

5. Device according to one of Claims 3 or 4, **characterized in that** the display unit (5) is embodied as a touch screen.

6. Device according to one of Claims 3 to 5, **characterized in that** the input unit is embodied as a speech-detection unit and/or as a bidirectional rotary pressure sensor.

7. Device according to one of Claims 3 to 6, **characterized in that** the temperature or the state of the engine oil can be sensed as states which are critical for the vehicle.

## Revendications

1. Procédé d'assistance active d'un conducteur dans une automobile, au moyen d'au moins un appareil de commande et d'un module de saisie et d'affichage (5), l'appareil de commande pouvant accéder aux données des capteurs et des appareils de commande importants pour l'état du véhicule et pouvant transmettre aux appareils de commande ou à des dispositifs de communication externe des instructions de commande, comprenant les étapes de procédé suivantes :
a) détection d'un état critique du véhicule par l'appareil de commande par analyse des données en provenance des capteurs et des appareils de commande importants pour l'état du véhicule,
b) établissement d'une liste d'actions possibles du conducteur du véhicule en fonction de l'état critique détecté du véhicule,
c) présentation de l'état critique détecté du véhicule et de la liste des actions possibles du conducteur du véhicule sur le module d'affichage (5) et
d) exécution par l'appareil de commande de l'action sélectionnée par le conducteur du véhicule.

2. Procédé selon la revendication 1, **caractérisé en ce que** l'état critique détecté du véhicule est la température de l'huile moteur ou le niveau d'huile moteur.

3. Dispositif d'assistance active d'un conducteur dans une automobile, comprenant au moins un appareil de commande et un module de saisie et d'affichage (5), des états critiques du véhicule pouvant être détectés par le biais de l'appareil de commande et pouvant être présentés sur le module d'affichage (5), **caractérisé en ce que** l'appareil de commande permet d'analyser les états critiques détectés du véhicule, d'établir une liste des actions possibles du conducteur du véhicule en fonction de l'état critique détecté du véhicule et de les présenter sur le module d'affichage (5), sous la forme d'une option de saisie associée à l'état critique du véhicule, une option de saisie sélectionnée pouvant être exécutée par l'appareil de commande.

4. Dispositif selon la revendication 3, **caractérisé en ce que** l'appareil de commande est relié à un bus CAN avec d'autres appareils de commande de l'automobile.

5. Dispositif selon l'une des revendications 3 ou 4, **caractérisé en ce que** le module d'affichage (5) est réalisé sous la forme d'un écran tactile.

6. Dispositif selon l'une des revendications 3 à 5, **caractérisé en ce que** le module de saisie est réalisé sous la forme d'un module de reconnaissance vocale et/ou d'un capteur de rotation/pression bidirectionnel.

7. Dispositif selon l'une des revendications 3 à 6, **caractérisé en ce que** les états critiques détectés du véhicule sont la température de l'huile moteur ou le niveau d'huile moteur.
